Europäisches Patentamt

European Patent Office

Office européen des brevets

(11) Numéro de publication: **0 117 816**
**A2**

(12) **DEMANDE DE BREVET EUROPEEN**

(21) Numéro de dépôt: **84400359.0**

(22) Date de dépôt: **22.02.84**

(51) Int. Cl.³: **B 60 R 13/06**

(30) Priorité: **28.02.83 DE 3307021**

(43) Date de publication de la demande: **05.09.84**
**Bulletin 84/36**

(84) Etats contractants désignés: **BE DE FR GB IT SE**

(71) Demandeur: **SAINT-GOBAIN VITRAGE, Les Miroirs 18, avenue d'Alsace, F-92400 Courbevoie (FR)**
(84) Etats contractants désignés: **BE FR GB IT SE**

(71) Demandeur: **VEGLA Vereinigte Glaswerke GmbH, Viktoria Allee 3-5, D-5100 Aachen (DE)**
(84) Etats contractants désignés: **DE**

(72) Inventeur: **Kraemling, Franz, Josef-Ponten-Strasse 91, D-5100 Aachen (DE)**
Inventeur: **Bartetzko, Joachim, Amselweg 37, D-5190 Stolberg (DE)**

(74) Mandataire: **Muller, René et al, SAINT-GOBAIN RECHERCHE 39, quai Lucien Lefranc, F-93304 Aubervilliers (FR)**

(54) Montage par collage d'un vitrage dans une baie, avec maintien du vitrage à distance de la baie.

(57) L'invention a trait au montage d'un vitrage dans une baie de carrosserie, par collage du vitrage dans la feuillure (6) de la baie, à l'aide d'un cordon adhésif (30). Selon l'invention, on entoure le vitrage, sur toute sa périphérie, d'un profilé d'encadrement (8) comprenant une section en U (10, 11, 12) qui maintient le vitrage, et, du côté dirigé vers la feuillure (6), une languette (17) qui pénètre totalement dans le cordon (30). Cette languette maintient la distance désirée entre le vitrage et la feuillure.

# MONTAGE PAR COLLAGE D'UN VITRAGE DANS UNE BAIE,

## AVEC MAINTIEN DU VITRAGE A DISTANCE DE LA BAIE

La présente invention concerne le montage de vitrages dans des baies de carrosserie de véhicules, notamment le montage de pare-brise. Elle concerne plus particulièrement le montage de tels vitrage par collage du vitrage dans la feuillure de la baie, à l'aide d'un cordon adhésif.

On cherche actuellement à abaisser toujours d'avantage la résistance à l'air des véhicules. A cet effet, on s'efforce de monter les vitrages dans les baies de carrosserie de façon à ce qu'ils soient placés à fleur de carrosserie, sans qu'apparaisse aucune protubérance entre la tôle de la carrosserie et le vitrage. Ceci implique de maintenir un plus grand espace entre le vitrage et le repli de la tôle de carrosserie sur lequel le vitrage vient se fixer et qui constitue la feuillure de la baie. Dans les cas où le vitrage n'est pas mis en place à l'aide des joints en caoutchouc usuels mais directement collé sur le repli de la tôle à l'aide d'un cordon adhésif, le but recherché implique de nouvelles exigences : il est alors nécessaire d'employer un cordon adhésif plus épais pour maintenir l'espace désiré entre le vitrage et la feuillure. Lors de la mise en place du vitrage dans la baie, il faut le presser, et par là même également presser le cordon adhésif, jusqu'à ce que le vitrage soit dans la position souhaitée. De ce fait, le montage du vitrage requiert du temps et de la précision, de façon à ne pas écraser le cordon à cause d'une trop grande pression.

On connaît, par la publication de brevet français FR 2 340 217 un système de montage d'un vitrage dans une baie, à l'aide d'un cordon adhésif, dans lequel le vitrage est maintenu à distance de la baie. Mais le maintien à distance est réalisé uniquement pour retenir l'étalement du cordon adhésif et ne contribue en rien à améliorer la fixation du vitrage à la baie.

L'invention a pour objet de fournir un système de montage de vitrages, spécialement adapté pour la mise en place de vitrages de la façon précédemment décrite, et grâce auquel on peut simplifier le montage tout en étant assuré que le vitrage sera effectivement en place à fleur de carrosserie.

A cette fin, le système de montage selon l'invention est tel que le vitrage est maintenu à distance de la baie par un profilé d'encadrement présentant du côté de la feuillure de la baie une languette qui traverse totalement le cordon adhésif.

Le vitrage, entouré sur toute sa périphérie du profilé d'encadrement est, grâce aux moyens de l'invention, obligatoirement maintenu à la distance désirée de la tôle de carrosserie, pourvu qu'on l'applique avec une pression suffisante contre le cordon adhésif.

Une fois la distance désirée atteinte, on peut alors augmenter encore la pression sans risque d'écraser le cordon adhésif, et donc accélérer le montage.

Suivant une des caractéristiques de l'invention la languette servant à maintenir la distance souhaitée entre le vitrage et la baie, ainsi que tout le profilé dont elle fait partie, est en une matière qui ne se déforme pas sous l'effet de la pression exercée au moment de la pose du vitrage.

Avantageusement, la matière employée est une matière plastique renforcée d'un métal comme l'aluminium.

D'autres caractéristiques particulièrement avantageuses de l'invention sont décrites dans les sous revendications ainsi que dans la description suivante en relation avec les dessins annexés, d'un exemple préféré de réalisation.

- la figure 1 représente une vue en coupe d'un montage selon l'invention monté dans une baie de carrosserie ;
- la figure 2 montre un profilé d'encadrement dans lequel la languette est enfilée dans un profilé supplémentaire ;
- la figure 3 est une coupe selon la ligne III-III de la figure 1.

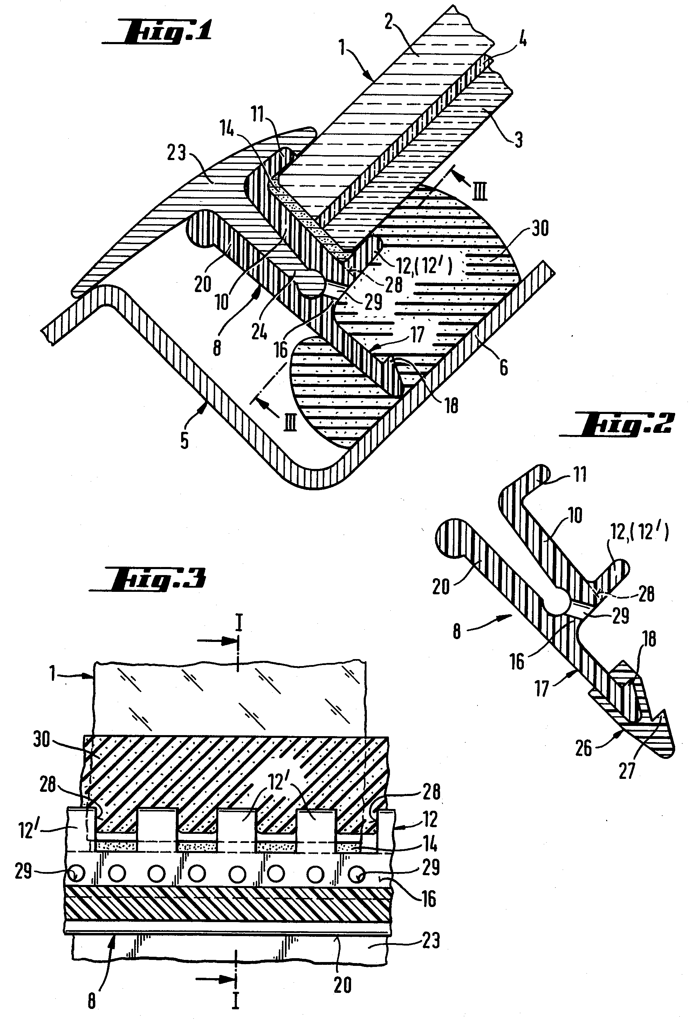

La représentation de la figure 1 montre une vue en coupe de la partie inférieure de la structure de la baie formée de la tôle de carrosserie 5 repliée pour donner un repli 6. Un vitrage 1 est collé dans la baie à l'aide d'un cordon adhésif 30.

Le vitrage 1 représenté à la figure 1 est un pare-brise feuilleté composé d'une feuille de verre extérieure 2, une feuille de verre intérieure 3 et une feuille intercalaire thermoplastique 4, par exemple en polyvinylbutyral. Le pare-brise 1 peut bien entendu avoir une toute autre structure, et notamment consister en un vitrage monolithique. L'invention est totalement indépendante du type de vitrage utilisé.

Le pare-brise 1 est entouré sur toute sa périphérie d'un profilé d'encadrement 8. Le profilé 8 présente une première section en U avec une base 10 et deux branches 11, 12, qui enserrent le pare-brise, en le maintenant par la tranche. Un joint adhésif d'étanchéité 14 est disposé entre la tranche du pare-brise 1 et la section en U du profilé d'encadrement. On pourra par exemple utiliser à cet effet un caoutchouc butyl dont l'étanchéité à l'eau et à l'humidité est connue. Outre son rôle d'étanchéité, il sert également d'adhésif entre le vitrage et le profilé d'encadrement.

Le profilé d'encadrement 8 présente également dans le prolongement de la branche 12, au delà de la base 10, une barrette de liaison 16 à laquelle est adjointe une languette 17 disposée à peu près perpendiculaire à la branche 12 et à la languette de liaison 16. La languette 17 peut être continue de bout en bout sur toute la longueur du profilé et donc sur toute la périphérie du vitrage, mais elle peut aussi se présenter sous la forme d'une succession de languettes espacées, sans pour autant cesser de jouer son rôle. La longueur de la languette 17 est déterminée en fonction des dimensions du repli de la carrosserie ou de la feuillure de la baie et de la position désirée du vitrage. La barrette est pourvue de garnitures d'accrochage 18 qui permettent un ancrage dans le cordon adhésif 30. Grâce à ces garnitures, on peut avantageusement se passer d'un traitement préalable particulier, qui serait souhaitable en leur absence pour parfaire l'adhérence entre la languette 17 et le cordon adhésif 30.

La languette 17 est également prolongée du côté orienté vers l'extérieur de la baie par une aile 20 qui, avec la base 10 de la première section en U et la barrette de liaison 16, forme une seconde section en U. L'évidement de cette seconde section (10, 16, 20) est destiné à recevoir la patte de fixation 24 d'un profilé de recouvrement 23, servant, de façon connue, à combler l'interstice entre le pare-brise et la tôle de carrosserie après le montage du pare-brise. Ce profilé 23 joue en particulier un rôle décoratif.

Afin de pouvoir adapter le profilé d'encadrement 8 à tous les types de baies, il est possible de prolonger à volonté la languette 17 en enfilant à son extrémité un profilé supplémentaire 26 sur toute la périphérie du profilé 8, comme cela est représenté à la figure 2. Les profilés 26 peuvent aussi présenter des garnitures d'accrochage 27 pour l'ancrage du profilé dans le cordon 30.

La branche 12, qui, en combinaison avec la branche 11, enserre le vitrage, peut présenter des conformations variables. Elle peut soit consister en une branche continue qui s'étend de bout en bout du profilé d'encadrement ; soit comme cela est illustré par la figure 3, se composer de surfaces isolées 12' séparées les unes des autres par des évidements 28. Dans cette forme de réalisation, puisque la branche 12 est en contact avec le cordon adhésif, la matière constitutive du cordon adhésif 30 peut passer à travers les évidements. La surface de contact entre le vitrage et la matière adhésive augmente et on parvient à renforcer l'adhérence du vitrage à la baie de carrosserie. De façon similaire, il est possible de réaliser, à intervalles réguliers, des évidements dans la branche 11, et, le cas échéant, dans la base 10 et l'aile 20, afin de prêter à tout le profilé 8 une souplesse accrue.

Suivant une caractéristique supplémentaire de l'invention, la barrette de liaison 16, qui constitue la base de la deuxième section en U, est percée de perforations 29 qui forment un passage entre le cordon 30 et l'évidement de la section en U (10, 16, 20). Ces perforations 29 sont particulièrement avantageuses lorsqu'il s'avère nécessaire de démonter le pare-brise : on retire le profilé de recouvrement 23, on introduit dans l'évidement libéré un fil résistant à la traction, par exemple un fil métallique. A travers la perforation 29, on enfonce une extrémité du fil dans le cordon et en tirant sur l'autre extrémité, on s'en sert comme d'un outil de découpe pour couper en deux à la fois la barrette de liaison 16 suivant la ligne de perforation et le cordon 30.

Selon une forme préférée de l'invention, on entoure le vitrage par le profilé 8, après avoir interposé le joint d'étanchéité 14, sur le lieu de fabrication du vitrage. Le profilé d'encadrement peut alors servir en outre à protéger les bords des vitrages lors des manutentions ultérieures, ainsi que lors du stockage.

Le montage du vitrage, par exemple un pare-brise, est ensuite réalisé très simplement : on applique sur la feuillure, ou plus préci-

0117816

semment, sur le repli de la tôle 6 un cordon adhésif 30 de dimensions correspondantes. On place le pare-brise entouré du profilé 8 sur le cordon et on le presse contre le repli 6, jusqu'à ce que la languette 17, traversant entièrement le cordon 30, vienne prendre appui contre le repli 6. Lorsque le cordon adhésif a durci, on met en place le profilé de recouvrement 23.

REVENDICATIONS

1. Montage d'un vitrage, notamment d'un pare-brise, dans une baie de carrosserie, par collage du vitrage dans la baie à l'aide d'un cordon adhésif, ledit vitrage étant maintenu à distance de la baie, caractérisé en ce que le vitrage est maintenu à distance de la baie par un profilé d'encadrement présentant du côté de la feuillure de la baie une languette qui traverse totalement le cordon adhésif.

2. Montage selon la revendication 1, caractérisé en ce que la languette (17) est en une matière qui ne se déforme pas sous l'effet de la pression exercée lors de la pose du vitrage.

3. Montage selon l'une des revendications 1 ou 2, caractérisé en ce que la languette (17) est en une matière plastique renforcée d'un métal comme l'aluminium.

4. Montage selon l'une des revendications 1 à 3, caractérisé en ce que la languette (17) est pourvue de garnitures d'accrochage (18) permettant un ancrage dans le cordon adhésif (30).

5. Montage selon l'une des revendications 1 à 4, caractérisé en ce que la languette (17) est prolongée à l'aide d'un profilé supplémentaire (26).

6. Montage selon l'une des revendications 1 à 5, caractérisé en ce que le vitrage (1) est maintenu par sa tranche dans une permière section en U (10, 11, 12) et le profilé d'encadrement (8) présente une deuxième section en U (10, 16, 20) dont l'évidement orienté vers l'extérieur de la carrosserie est destiné à recevoir la patte de fixation (24) d'un profilé de recouvrement (23), la languette (17) étant dans le prolongement de la branche (20).

7. Montage selon la revendication 6, caractérisé en ce qu'un joint adhésif d'étanchéité (14) est disposé entre la tranche du vitrage (1) et la base (10) de la section en U (10, 11, 12) de maintien du vitrage.

8. Montage selon l'une des revendications 6 ou 7, caractérisé en ce que la branche (12) de la section en U de maintien du vitrage en contact avec le cordon adhésif (30) présente des évidements (28).

9. Montage selon l'une des revendications 6 à 8, caractérisé en ce que la base (16) de la deuxième section en U est percée de perforations (29).

**Fig.1**

**Fig.2**

**Fig.3**